# EUROPEAN PATENT SPECIFICATION

(11) **EP 1 937 433 B1**
(45) Date of publication and mention of the grant of the patent: **15.02.2012**
(21) Application number: 06794615.2
(22) Date of filing: 02.10.2006
(51) Int. Cl.: B22F 5/12, B22F 5/10, F28F 9/26

(54) **FORMING OF APERTURED ARTICLES**
BILDUNG VON ARTIKELN MIT ÖFFNUNGEN
FORMATION D'ARTICLES PERFORES

(30) Priority: 19.10.2005 GB 0521230
(43) Date of publication of application: 02.07.2008
(73) Proprietor: GTB Components Ltd., St Helens, Merseyside WA9 1TA (GB)
(72) Inventor: CORCORAN, Terence, Merseyside WA9 1TA (GB)
(74) Representative: Moore, Christopher Mark
(86) International application number: PCT/GB2006/003663
(87) International publication number: WO 2007/045816

(56) References cited:
- WO-A-94/08743
- DE-A1- 19 724 879
- GB-A- 2 012 654

## Description

This invention relates to the forming of apertured articles. In particular, the invention relates to the manufacture of an apertured article by pressing or compacting particulate material in a tool or mould to provide an apertured article. The so-formed articles may have utility in central heating radiators.

Many hot water central heating radiators of pressed steel construction have the inlet and outlet connectors going into the rear panel at the corners. Some just have bottom connectors, some have both top and bottom, *i.e*. at each corner on the rear panel. Most manufacturers projection weld the connectors onto the rear panel. Since the radiator is hollow at this point, a spacer is placed between the front and the rear panels to support the rear panel during the welding operation. The spacers are generally in the shape of a ring, so that, in use, water can pass through the connector into the centre of the ring, and out through holes or slots provided in the spacer. During production of the radiator the spacer has to be fed and accurately located either over or under a hole already pierced in the back panel which is smaller than the bore of the spacer, or to a definite location under a diamond shaped punch. The spacer is then secured to the panel by a punch which plunges material into the spacer centre hole, or by the diamond shaped punch piercing and plunging to hold the spacer in position. It is also known to pierce a hole in the panel into which is fitted a spacer with a collar, which is then lightly peened to hold.

GB 2012654A discloses a method and apparatus for making a spacer from compacted powder using a single movable core, the spacer thus formed having a single aperture defining a channel transverse the direction of pressing. The core is introduced after the powder and there is no appreciable difference in density throughout the spacer. The apparatus requires means to hold and fix the core in position during use.

In our previously filed International (PCT) patent application PCT/GB93/02069 (published as WO94/08743) we disclose and claim a method of making an apertured article which has a central bore and four co-axial radial apertures extending perpendicular to the principal axis of the bore.

It has now been discovered that, using a method modified from the teaching of WO 94/08743 (the entire disclosure of which is incorporated by reference herein), it is possible to provide apertured articles which, when used in the context of radiators, exhibit *inter alia* improved performance over the apertured articles of the prior art.

Accordingly, a first aspect of the invention provides a single-pressed article formed of compacted particulate material and having an axial passageway, and having at least one aperture extending tangentially from said axial passageway.

In this specification the terms "tangential", "tangentially directed", "tangentially arranged" and similar terms are, when used in the context of describing the apertures, intended to mean that the principal axis of the aperture is tangential to the principal axis of the central aperture or is at, least shifted from a radial orientation towards a tangential orientation (when viewed as a section through the article in a plane extending across the article along the principal axis of the aperture).

"Tangential" and similar terms are also intended to be applied when the central bore or axial passageway is not circular in cross-section. For example, if the passageway is square in plan, the intersection of the principal axis of the aperture with the passageway will be located away from the mid point along one of the lengths of the passageway towards a node. For other polygons the reference to "tangential" will be understood in accordance with the above description or with reference to a notional or imaginary circle which bounds the polygon.

Preferably the article has a plurality of apertures, for example two, three or four.

The article may be substantially cylindrical

In another embodiment the article may be substantially U-shaped or other shaped to facilitate orientation in an automatic feed system of a radiator production line.

In the prior art the density of the spacer above and below the apertures is the maximum achievable with the powder type being used and lower elsewhere. It is believed that this is because in the initial stages of compaction powder can flow sideways from above and below the side core pins but as density between the holes increases this stops. At this point powder reaches maximum density above and below the side core rods and further compaction of the rest of the part is prevented. The maximum overall density which can typically be achieved in the prior art WO 94/08743 method disclosed using a type of iron powder is 6.5 gcm⁻³. However, it has been found that when, in accordance with this invention, a side core rod which is tangentially oriented is present in the mould, the density is more uniform throughout the subsequently formed part. In the current invention, using the same iron powder, it is possible to obtain a part with a higher and, in most cases, substantially uniform density, of about 7.00 gcm⁻³.

Accordingly, it has been surprisingly found that by changing the position of apertures a number of benefits are derived, for example:
a) the overall density of the part is usually higher
c) the density of the so-formed part may be more uniform
b) there is less turbulent flow through the aperture(s) when installed along an edge, for example the top edge, of a radiator.

Because of the increase in density, and/or because of the more uniform nature of the density, it has been possible to reduce the mass of particulate material used, thereby leading to weight savings of 5-10% whilst increasing, or at least not compromising, the strength of the part, or indeed the strength of the part can be increased whilst not compromising weight, and consequently, the cost.

The principal axis of a tangentially-aligned aperture is typically, for a round spacer with a round passageway, 10-20% longer than that of the radially aligned aperture for similar sized part. This encourages laminar flow and reduces turbulence. Tangential orientation of the holes reduces turbulence when the hole is adjacent to a panel edge. A polygonal article which approximates the shape of a circle may have an aperture which is similarly longer than a corresponding nominally radial aperture.

A further aspect of the invention provides a radiator comprising at least one spacer as previously described.

A yet further aspect of the invention provides a method of forming an article of compacted material, the method comprising locating particulate material in a first mould part having a core rod extending therethrough and one or more side rods extending tangentially from said core rod and compacting the particulate material by bringing the first and a second mould parts towards one another, retracting the core rod and the one or more side rods and removing from the mould part a formed article having a passageway and at least one tangential aperture.

In order that the invention may be more fully understood, it will now be described by way of example only and with reference to the accompanying drawings, in which:
Figure 1A is a perspective view of a prior art article;
Figure 1B is a sectional view of the prior art article of Figure 1A;
Figure 2 is a sectional view of an article according to the invention;
Figure 3A is a sectional view of a second article according to the invention;
Figure 3B is an end elevation of the article of Figure 3A;
Figure 4 is a sectional view of a die for making a central heating radiator spacer during a filling stage;
Figure 5 is the same view as Figure 4 during an ejection stage.

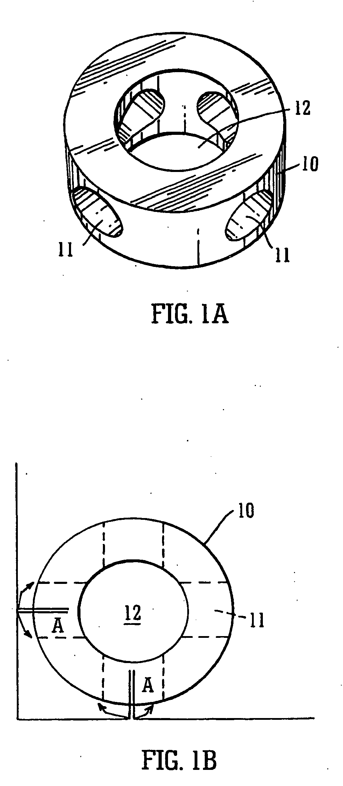

Referring first to Figures 1A and 1B there is shown a prior art spacer 10 which consists of a ring of compacted iron powder having a central passageway 12 and two pairs of diametrically opposed radially extending holes 11.

As is indicated by arrows A, when fluid flows along the passageway 12 and out of the diametrically opposed holes 11, the fluid will 'spill' out of the holes 11 in no particular direction, which is to say that the egressing fluid is not directed.

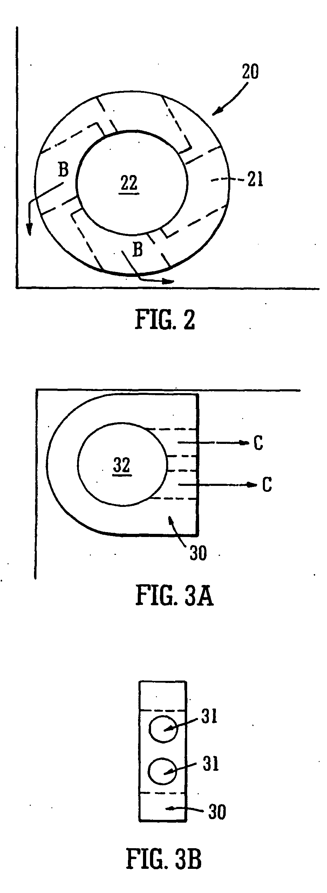

Referring to Figure 2 there is shown a spacer 20 having a central passageway 22 and four tangential apertures 21 which extend from the passageway 22 to the outer circumference [24] of the spacer 20.

As is indicated by the arrows B, fluid which flows from the passageway 22 along the apertures 21 is directed out of the apertures 21. It will be noted that because the apertures 21 are displaced from a radial orientation (as is the case with the prior art), the apertures 21 are longer (for the same sized spacer). In the Figures of 1B and 2, the principal axis of the aperture 21 of the spacer 20 is about 15% longer than that of the aperture 11 of the spacer 10. Consequently, the degree of direction imparted to the egressing fluid is higher.

It will be noted that there are no lines of symmetry across the section of the spacer 20.

Figures 3A and 3B show a further spacer 30 having a central passageway 32 and a pair of apertures 31 which are displaced from a radial configuration towards a tangential configuration. The spacer 30 is substantially U-shaped. Fluid flows from the apertures in the direction of arrows C. Again, it will be noted that by shifting the apertures 31 from a radial orientation towards or at a tangential orientation the apertures 31 are longer than they otherwise would have been.

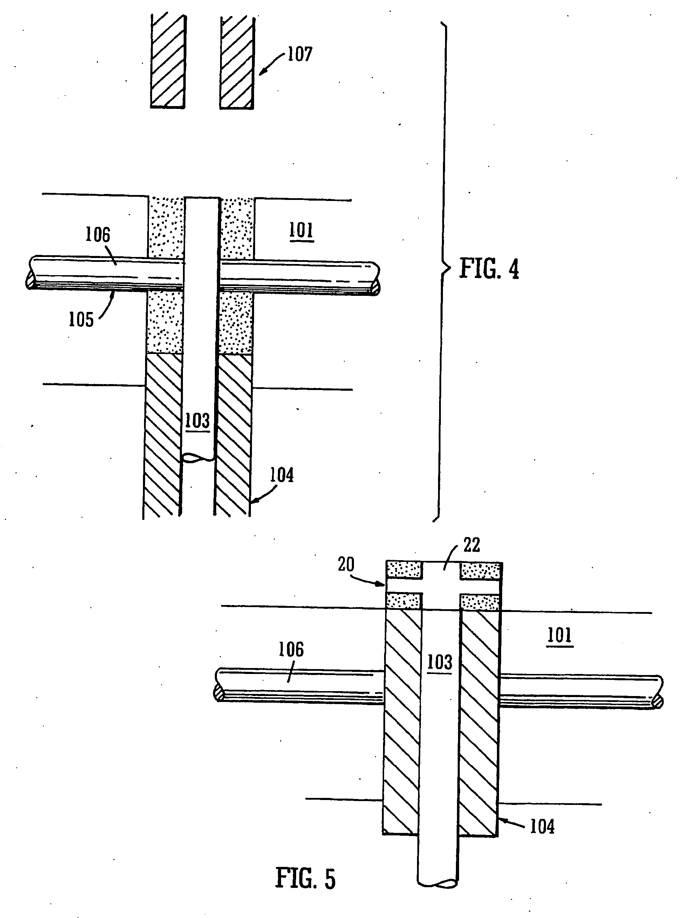

Figures 4 and 5 show apparatus which is disclosed in WO 94/08743 but which when suitably modified may be used to fabricate articles 20, 30 of the invention.

A die comprises a metal plate 101 having a vertical cavity [102]. An inner core 103 is present in the cavity 102 surrounded at its lower end by a bottom punch 104. When the cavity 102 is empty the inner core rod 103 is level with the top face of the die. Passageways 105 are present in the sides of the plate 101 and open at the sides of the cavity 102; the passageways 105 are in horizontal tangential alignment. The passageways 105 contain side core rods 106 which can be advanced by power means, not shown, to contact the inner core rod 103. Four such rods 106 are present. A top punch 107 is present above the cavity 102.

In use, the cavity 102 is filled with a loose compactable material such as iron powder optionally with suitable additives. Before filling the cavity 102, the top of the inner core rod 103 is level with the top face of the plate 101. The side rods 106 are preferably already in contact with the inner side rod 103. The top punch 107 is lowered and the bottom punch 104 raised relative to the top punch 107 to compact the material to form the spacer 20. The pressing is thus in the axis of the vertical cavity 102. The compression ratio is usually about 2:1. After the application of the pressure for a predetermined time the top punch 107 is raised free of the plate 101, and the side core rods 106 are retracted and the bottom punch 104 is further raised to bring the formed space to the top surface of the plate 101. The spacer 20 thus formed (shown in Figure 2) is removed and the cycle is repeated.

The apparatus may be similarly used to fabricate the spacer 30 with two side core rods 106 extending from one side of the die.

In contradistinction to the prior art (*e.g*. WO 94/08743), the spacer 20 has a substantially uniform density throughout its volume. Whilst it is not fully understood how this occurs it is believed, although we do not intend to be bound by any particular theory, that the particles are more able to flow during compaction because of the relative positions of the inner core rod 103 and side core rods 106. It is within the scope of this invention that either the density will be uniform or that there will be a slightly increased density in the area around the apertures. In either case, the overall density of the part is usually or preferably higher, for the same type and amount of powder, than is achievable in the prior art.

Even though the core rods are tangentially arranged it will be appreciated that there is no need for them to be clamped in place during use (in contradistinction with some teaching of the prior art) which ensures that the cost and manufacturing complexity (including training of operatives) is reduced.

Indeed, and as will be appreciated from the comparison between Figures 1B and 2, it can be seen that the spacer 20 according to the invention contains less material. Our tests shown that the spacer 20 is stronger than the prior art spacer 10 which, means that when it is used, in a radiator it is much less likely to burst when being fixed in position, or deform when subjected to projection welding pressure.

The spacers 20, 30 may comprise more or fewer apertures than are shown.

The spacers 20, 30 or the apertures 22, 32 may be in the form of a square or other polygonal form whilst the aperture is shown as extending perpendicular to the axial passageway it need not do so.

## Claims

1. A single-pressed article formed of compacted particulate material and having an axial passageway, and having at least one aperture **characterised in that** said aperture extends tangentially from said axial passageway.

2. An article according to Claim 1, comprising a plurality of tangential apertures.

3. An article according to Claim 2, wherein the plurality of tangential apertures are equi-spaced about the article.

4. An article according to any of Claims 1, 2 or 3, the article being substantially cylindrical in plan.

5. An article according to Claim 1, the article being substantially U-shaped in plan.

6. An article according to Claim 5, comprising a plurality of tangential apertures.

7. An article according to Claim 5 or 6, wherein the or each aperture extends from the passageway to a flat face of the article.

8. An article according to any preceding Claim, wherein the principal axis of aperture is 10 to 20 % longer than a radial line between the passageway and the outer perimeter of the article.

9. An article according to any preceding Claim, wherein the density of the article is substantially uniform.

10. An article according to any of Claims 1 to 8, wherein the density is higher in the area around the at least one aperture.

11. A radiator comprising at least one article as claimed in any preceding Claim.

12. A method of forming an article of compacted material, the method comprising locating particulate material in a first mould part having a core rod extending therethrough and one or more side rods extending from said core rod and compacting the particulate material by bringing the first and a second mould parts towards one another, retracting the core rod and the one or more side rods and removing from the mould part a formed article having a passageway and at least one aperture, **characterised in that** the one or more side rods extend tangentially from said core rod and the at least one aperture is tangential with respect to the passageway.

13. A method according to Claim 12, wherein the side rods are brought into proximity with the core rods prior to locating the particulate material in the mould.

## Patentansprüche

1. Einfach gepresster Artikel aus verdichtetem Partikelmaterial, welcher einen axialen Durchlass aufweist, und der wenigstens eine Öffnung enthält, **dadurch gekennzeichnet, dass** die Öffnung sich tangential von dem axialen Durchlass erstreckt.

2. Artikel nach Anspruch 1, der eine Mehrzahl von tangentialen Öffnungen aufweist.

3. Artikel nach Anspruch 2, bei dem die Mehrzahl von tangentialen Öffnungen einen gleichen Abstand um den Artikel aufweist.

4. Artikel nach einem der Ansprüche 1, 2 oder 3, welcher in der Draufsicht im Wesentlichen zylindrisch ist.

5. Artikel nach Anspruch 1, welcher in der Draufsicht im Wesentlichen U-förmig ist.

6. Artikel nach Anspruch 5, welcher eine Mehrzahl von tangentialen Öffnungen aufweist.

7. Artikel nach Anspruch 5 oder 6, bei dem sich die oder jede Öffnung von dem Durchlass zu einer flachen Fläche des Artikels erstreckt.

8. Artikel nach einem der vorhergehenden Ansprüche, bei dem die Hauptachse der Öffnung 10 - 20% länger als eine radiale Linie zwischen dem Durchlass und dem äußeren Umfang des Artikels ist.

9. Artikel nach einem der vorhergehenden Ansprüche, bei dem die Dichte des Artikels im Wesentlichen gleichmäßig ist.

10. Artikel nach einem der Ansprüche 1 bis 8, bei dem die Dichte höher im Bereich um die wenigstens eine Öffnung ist.

11. Heizkörper, welcher wenigstens einen Artikel nach einem der vorherigen Ansprüche enthält.

12. Verfahren zur Bildung eines Artikels aus verdichtetem Material, wobei das Verfahren Folgendes enthält: die Anordnung von Partikelmaterial in einem ersten Formteil, das einen Kernstab aufweist, der sich dadurch erstreckt und ein oder mehrere Seitenstäbe, die sich vom Kernstab erstrecken, Verdichtung des Partikelmaterials durch Zusammenbringen der ersten und einer zweiten Formhälfte gegeneinander, Zurückziehen des Kernstabs und des einen oder mehrerer Seitenstäbe, und Entfernen eines geformten Artikels aus dem Formteil, welches einen Durchlass und wenigstens eine Öffnung enthält, **dadurch gekennzeichnet, dass** der eine oder die mehreren Seitenstäbe sich tangential von dem Kernstab erstrecken und die wenigstens eine Öffnung tangential in Bezug auf den Durchlass verläuft.

13. Verfahren nach Anspruch 12, bei dem die Seitenstäbe vor der Anordnung des Partikelmaterials in der Form nahe an den Kernstab gebracht werden.

## Revendications

1. Article pressé selon une technique de presse à simple effet, formé avec un matériau particulaire compacté et ayant une voie de passage axiale, et ayant au moins une perforation, **caractérisé en ce que** ladite perforation s'étend de manière tangentielle à partir de ladite voie de passage.

2. Article selon la revendication 1, comprenant une pluralité de perforations tangentielles.

3. Article selon la revendication 2, dans lequel la pluralité de perforations tangentielles sont espacées à égale distance autour de l'article.

4. Article selon l'une quelconque des revendications 1, 2 ou 3, l'article étant sensiblement cylindrique en plan.

5. Article selon la revendication 1, l'article ayant sensiblement une forme de U en plan.

6. Article selon la revendication 5, comprenant une pluralité de perforations tangentielles.

7. Article selon la revendication 5 ou 6, dans lequel la ou chaque perforation s'étend à partir de la voie de passage jusqu'à une face plate de l'article.

8. Article selon l'une quelconque des revendications précédentes, dans lequel l'axe principal de la perforation est de 10 à 20% plus long qu'une ligne radiale située entre la voie de passage et le périmètre externe de l'article.

9. Article selon l'une quelconque des revendications précédentes, dans lequel la densité de l'article est sensiblement uniforme.

10. Article selon l'une quelconque des revendications 1 à 8, dans lequel la densité est plus importante dans la région située au moins autour d'une perforation.

11. Radiateur comprenant au moins un article, selon l'une quelconque des revendications précédentes.

12. Procédé pour former un article à partir d'un matériau compacté, le procédé comprenant l'étape consistant à positionner le matériau particulaire dans une première partie de moule ayant une broche centrale s'étendant à travers cette dernière et une ou plusieurs broches latérales s'étendant à partir de ladite broche centrale et compactant le matériau particulaire en amenant les première et deuxième parties de moule l'une vers l'autre, rétracter la broche centrale et les une ou plusieurs broches latérales et retirer de la partie de moule, un article formé ayant une voie de passage et au moins une perforation, **caractérisé en ce que** les une ou plusieurs broches latérales s'étendent de manière tangentielle à partir de ladite broche centrale et la au moins une perforation est tangentielle par rapport à la voie de passage.

13. Procédé selon la revendication 12, dans lequel les broches latérales sont amenées à proximité des broches centrales pour positionner le matériau particulaire dans le moule.
